# EUROPEAN PATENT APPLICATION

(11) **EP 3 369 873 A1**
(43) Date of publication of application: **05.09.2018**
(21) Application number: 18159731.1
(22) Date of filing: 02.03.2018
(51) Int. Cl.: E04F 13/08, F16B 5/06, E06B 3/58, E06B 3/30

(54) **REVERSIBLE FIXING SYSTEM FOR PANELINGS**

(30) Priority: 03.03.2017 IT 201700024121 U
(71) Applicant: PEDRINZANI SRL, 54100 Massa (MS) (IT)
(72) Inventor: Pedrinzani, Massimo, 54100 Massa (MS) (IT)
(74) Representative: Fanfani, Stefano

(57) **Abstract**

A kit for reversibly fixing protective, insulating, or decorative panelings on any kinds of support, in particular doors and windows, masonries, piece of furniture, slabs of marble, and panes of glass.

## Description

### Technical field

The present invention belongs to the sector of the kits used for reversibly mounting decorative, paneling, and/or insulating elements on any kinds of surfaces.

Specifically, the present invention concerns a practical system for mounting finishing elements, made from wood or other materials, including fine materials, on supports of different kinds, for instance panels of pieces of furniture, masonry walls, doors and windows, slabs of marble, and panes of glass.

More exactly, the present invention refers to a kit for fixing paneling elements for doors and windows of a conventional type, generally made from wood or metal. Advantageously, the invention can also operate as a glazing bead.

A method for applying the kit is also disclosed.

### State of the art

Techniques are known for a long time for mounting decorative or insulating panels or strips on doors and windows, furniture for interior, or even on walls of interior rooms of a house.

Such paneling elements are often made from wood or other fine materials. Besides performing a decorative function, such panelings also perform a protection and insulation function for the surface underneath.

For instance, the use of staff beads and jambs, generally made from wood or aluminum, is known for paneling the fixed frames of doors and windows.

Profile elements made from wood or other fine materials are also used to panel frames of the movable parts of doors and window, such as for instance the shutters of a windows.

As a matter of fact, doors and windows made from metal or PVC are particularly requested in the market because of thermal and acoustical insulation reasons, which wood panelings are often applied to with the purpose of improving their appearance.

Likewise, techniques are known for paneling and decorating the masonries of the interior rooms of buildings, such as for instance ceiling frames, false ceilings, wood panelings (boiseries) and wainscots, commonly called skirting-boards or baseboards, placed along the lower part of the walls.

In the past these decorative elements were directly applied onto the surface to be paneled by using nails or other similar connection means, or by using adhesive chemical substances and glueing the inner part of the paneling directly onto the surface of the object or structure to be paneled or decorated, in order to provide a better appearance.

The main disadvantage of using conventional junction elements such as, for instance, nails or screws is in that the "head" of the junction element, once driven into the paneling, remains "in sight", thus spoiling the appearance of the paneling, and additionally in that it is necessary to drill both the paneling and the substrate which this one is to be joined to, thus weakening them.

If adhesive substances are used, such as for instance resins or glues, there is a risk that, as time goes by, the paneling comes off because of the progressive ageing of the adhesive and the consequent partial loss of its adhesive power; also, using chemical glues makes it very difficult, or even impossible, to remove the paneling, for instance should it be necessary to replace it in case of damage or in order to perform maintenance operations, because there is a concrete risk of irreparably damaging the surface which the paneling had been secured to.

In the case of windows and doors made from wood or aluminum, paneling systems have been introduced from a long time, which allow to obviate the above described problems by using such specially shaped paneling strips as to make it possible to embed them in the surface of the fixed frame of a window or a door, or in the surface of the movable frame of the window or door itself.

For instance, paneling systems have been developed for doors and windows wherein a finishing strip connects to the frame by way of snap fasteners, or other embedding means, for instance by way of longitudinal grooves present on the inner side of the paneling and suitable for receiving respective bulges projecting from the frame of the door or window.

However, in these cases it is necessary that the frame of the door or window be specifically manufactured for making it possible to connect it to the paneling element, and the latter shall also have been specially implemented so as to make it possible to expressly match it to a given frame for doors or windows.

Systems of such type require a production line dedicated to frames and panelings, which shall be realized according to precise and specific techniques in order for them to be connected to each other, which entails obvious negative consequences on production costs.

Another drawback of the systems currently known is in that a paneling made for connecting to a given frame cannot be applied to a frame manufactured by another manufacturer and featuring a different interconnection means.

An example of such technical solution is disclosed in European patent EP0695847 which claims an assembly of profiles made from metal-wood, used for implementing doors and windows, substantially consisting of wood panelings which are associated with the metal profile making up the frame of the door or window, by way of strips made from a plastic material. Such plastic strips connect to the metal profile on one side and to the wood panel on the other side, thanks to the presence of projecting and deformable bulges suitable for embedding in specifically designed seats cut in the metal profile and in the wood paneling respectively.

Some of the solutions known in the present state of the art also specify the use of gaskets, for instance rubber gaskets, interposed between the support element and the paneling strip, in order to increase the adherence between said two elements and prevent the strip from accidently slipping off.

An example of such technical solution is disclosed in Chinese patent application CN202380888 wherein an intermediate sealing element is interposed between the knurled protrusion of the support element and the seat of the strip.

However, none of the above described paneling systems is directly applicable to the classic frame of a window or a door, hence to a support not having junction means specifically implemented for connecting to a specific paneling strip. Much less the glazing bead function is performed by the device in the mentioned documents.

### Objects and summary of the invention

A first object of the present invention is thus to provide a practical and cost-effective kit for reversibly mounting decorative and/or insulating paneling elements made from wood or other materials, including fine materials, on surfaces of different kinks such as for instance frames of doors and windows, masonries, walls, and pieces of furniture for interiors.

In particular, an object of the present invention is to provide an innovative system that does not require the use of chemical adhesives on the external paneling portion nor requires to drill it in order to connect it to the surface to be paneled.

Very advantageously, the system according to the present patent application allows to apply decorative and/or insulating elements on any kinds of frames for doors and windows, even if the latter are of a conventional type, hence not formed of profiles specially shaped for being connected to a specifically manufactured paneling element.

Another undoubted advantage of the present invention is in that it allows to easily dismantle the paneling, for instance in order to perform maintenance operations on a door or window or to replace the paneling in the case of an excessive tear and wear or following a damage. Surprisingly, the present paneling system can be applied not only onto mobile frames and onto fixed frames of doors and windows, but also, for instance, on panelings of pieces of furniture or on masonries inside or outside a building, and more generally onto any kinds of surfaces.

Some embodiments of the invention make it possible to secure a glass or a double glazing to the support, possibly by way of a standard gasket, received in seats that develop longitudinally.

Other objects and advantages of the invention will be apparent to those skilled in the art upon reading the following text.

The above described objects are achieved thanks to the characteristics of claim 1, in particular by using a surface paneling securing kit comprising an external paneling element and a male interconnection element, the latter to be integrally connected to the surface of the internal support which the paneling will be applied onto. Advantageously, the male interconnection element is smooth, i.e. with no bulges, in particular it doesn't have any bulges suitable for engaging corresponding seats expressly cut in the internal support; in other words, the male interconnection element (1) features a flat inner longitudinal face.

The connection means between said internal support and the male interconnection element are of a known type, for instance screws, bolts, or rivets can be used; if necessary, glues or double-sided adhesive tapes.

The external paneling element, which comprises an external paneling portion, and the male interconnection element are connected to each other reversibly.

Preferably, such external paneling element is a plate-like body or a thin and elongate longitudinal element, whereas said male interconnection element is an elongate element featuring at least one inner longitudinal face suitable for facing the surface of the support to be paneled and at least one outer longitudinal face featuring one or several longitudinal ribs suitable for reversibly engaging respective longitudinal channels present in the inner surface of said external paneling element.

Advantageously, such longitudinal ribs feature serrated ends so as to increase the friction with the inner surface of said longitudinal channels of the paneling element and to reduce the risk of their possible slippages or accidental peeling off. Also, a longitudinal sealing element is interposed between a longitudinal rib and its respective longitudinal channel, which has a number of serrations on the outer side, so as to prevent the paneling element from accidently detaching. The longitudinal sealing element might also provide tightness and/or greater thermal insulation.

In more details, such longitudinal sealing element is made from an at least partially deformable material, at least part of its cross section being shaped like a letter "U" and whose lateral, inner and outer surfaces feature a plurality of male longitudinal ridges, parallel to each other and shaped in such a way that at least one male longitudinal ridge of the inner lateral surfaces engages a respective longitudinal recess of said one or several longitudinal ribs. Also, said male longitudinal ridges of the outer lateral surfaces are suitable for getting deformed in order to reversibly engage their corresponding longitudinal channels defined on the inner face of the external paneling element.

Advantageously, one male interconnection element can include a plurality of longitudinal ribs. If several longitudinal ribs are provided, then it is also possible to connect more external paneling elements.

The kit possibly comprises a second male interconnection element, which allows to also perform a glazing bead function, as better described below. The teachings of the present patent application can be directly applied to a male longitudinal glazing bead element which is suitable for being made integral with a slotted door or window by taking advantage of the groove generally present in the wood close to the glass.

### Brief description of the drawings

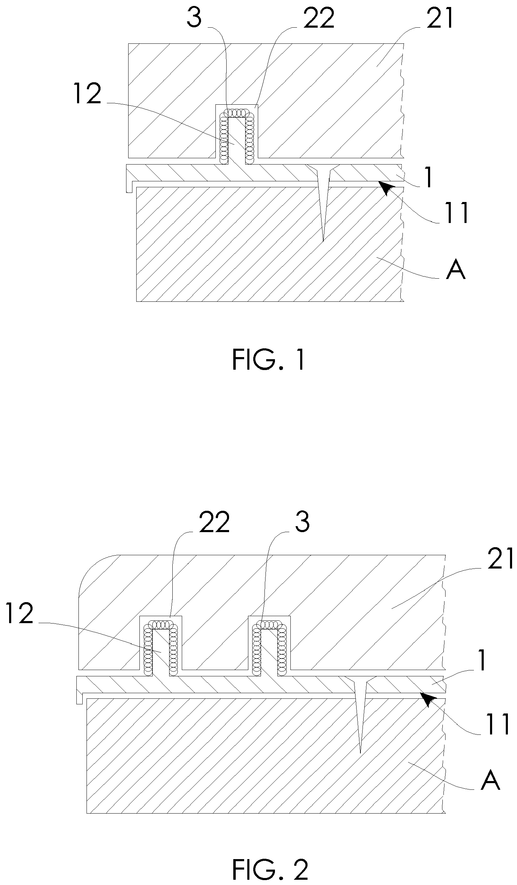

**Figure 1** shows a cross sectional view of an embodiment of the invention, which shows a male interconnection element (1) including an inner longitudinal face (11) integrally connected to an internal support (A), by way of a screw, and an outer longitudinal face from which a longitudinal rib (12), engaged inside a longitudinal channel (22) cut in the external paneling portion (21) of an external paneling element (2), orthogonally projects; a longitudinal sealing element (3), placed on said longitudinal ridge (12), is also visible.
**Figure 2** shows a cross sectional view of a second embodiment of the reversible fixing kit, wherein the male interconnection element (1) comprises two longitudinal ribs (12) inserted in as many longitudinal channels (22) of an external paneling portion (21).

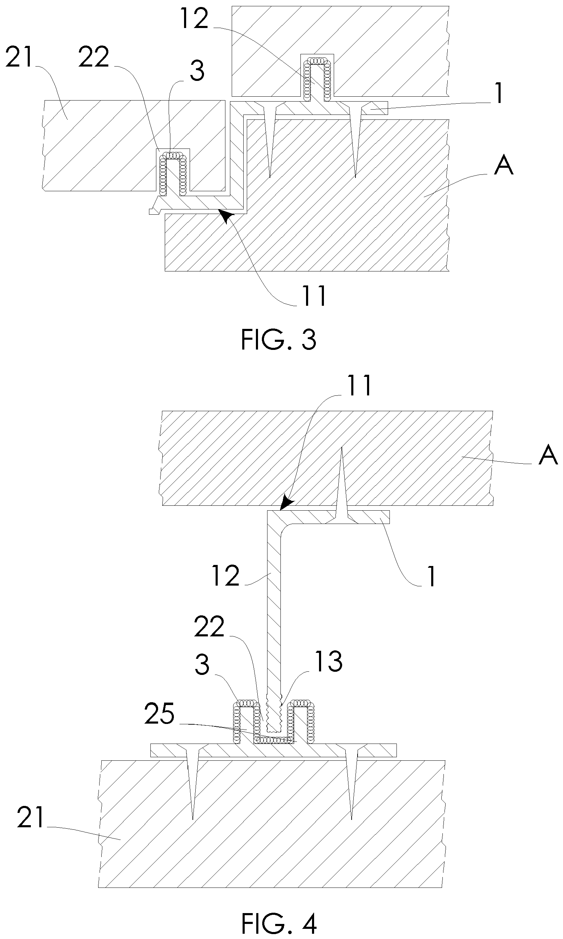

**Figure 3** shows a cross sectional view of a further embodiment of the fixing kit wherein the male interconnection element (1) is coupled with two external paneling elements (2).
**Figure 4** shows a cross sectional view of a further embodiment of the fixing kit, wherein the male interconnection element (1) is connected to the internal support (A) and features a projecting longitudinal ridge (12) which is engaged, by way of a longitudinal sealing element (3), inside a longitudinal channel (22) defined by an internal portion (24) of a female interconnection element of the external paneling element (2). In this embodiment, the side walls of the longitudinal channel (22) consist of a pair of projecting longitudinal ridges (25), parallel to each other, present on the internal portion (24) of said female interconnection element.

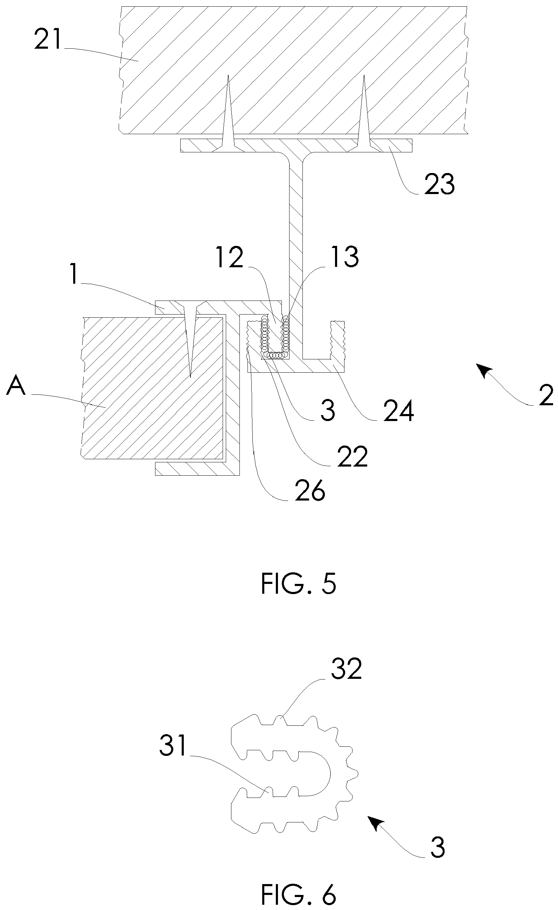

**Figure 5** shows a cross sectional view of a further embodiment of the fixing kit comprising a male interconnection element (1) with three longitudinal inner faces and one longitudinal rib (12) featuring a plurality of parallel longitudinal recesses (13) in a second section perpendicular to a first attach section for attaching to the outer longitudinal face of the male interconnection element (1).
**Figure 6** shows one embodiment of a longitudinal sealing element (3), made from an at least partially deformable material, comprising a plurality of male longitudinal ridges (31) on the inner lateral surfaces and a plurality of male longitudinal ridges (32) on the outer lateral surfaces.

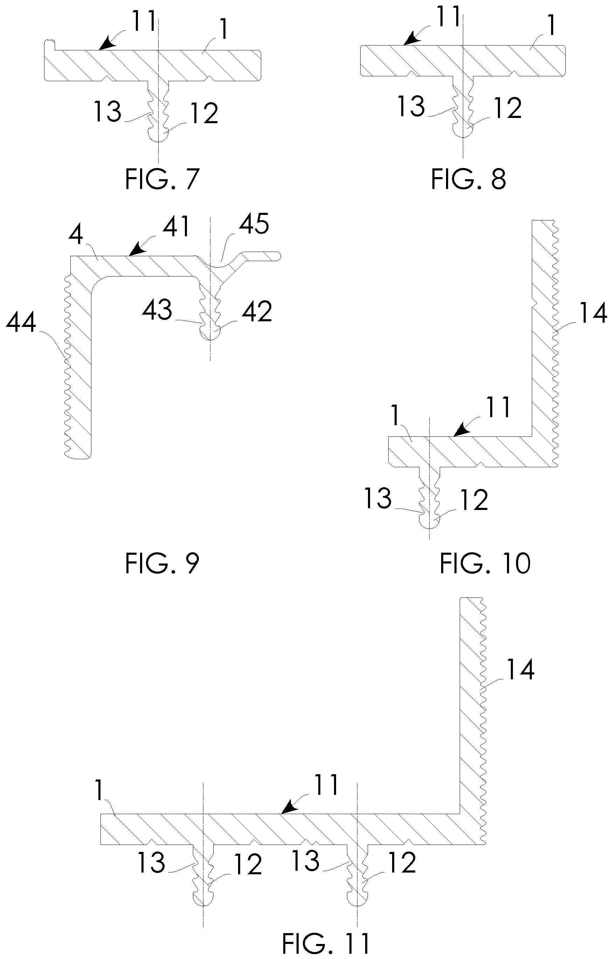

**Figure 7** and **Figure 8** show each a male interconnection element (1), both having a longitudinal rib (12) featuring a plurality of parallel longitudinal recesses (13).
**Figure 9** shows a second male interconnection element (4) which comprises a knurled internal portion (44) and is shaped like a longitudinal body with an inner longitudinal face (41), perpendicular to the knurled internal portion (44), wherein there is at least one longitudinal seat (45) suitable for receiving a gasket (B) of a glass or a double glazing (C). One or several longitudinal ribs (42) orthogonally project from the outer longitudinal face of said second male interconnection element, whose lateral surfaces feature a plurality of parallel longitudinal recesses (43).
**Figure 10** and **Figure 11** show two versions of a male interconnection element (1) comprising a knurled external portion (14), differing from each other in the presence of one or two longitudinal ribs (12), respectively.

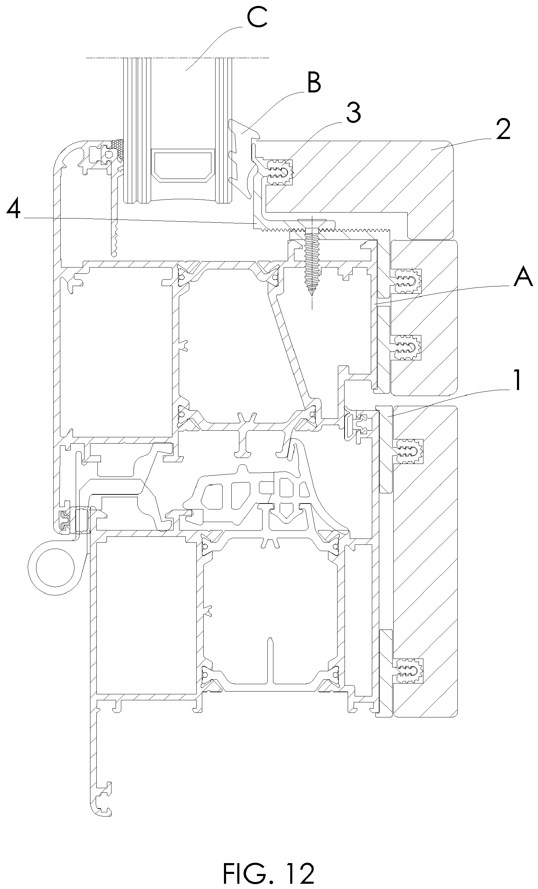

**Figure 12** shows an application of some embodiments of the invention onto an internal support (A) consisting of a window made from aluminum with a double glazing (C) provided with a gasket (B). In the embodiment on the top, the kit comprises a male interconnection element (1) like that shown in figure 10 and a second male interconnection element (4) like that shown in figure 9, integrally connected to each other by way of their respective knurled portions (14, 44) held together by one or several threaded elements, so as to firmly lock the glass. A number of slots can be cut in the second male interconnection element (4), or in the male interconnection element (1) if necessary, to adjust the mutual position of these elements, so as to allow for mounting glasses featuring different thicknesses.

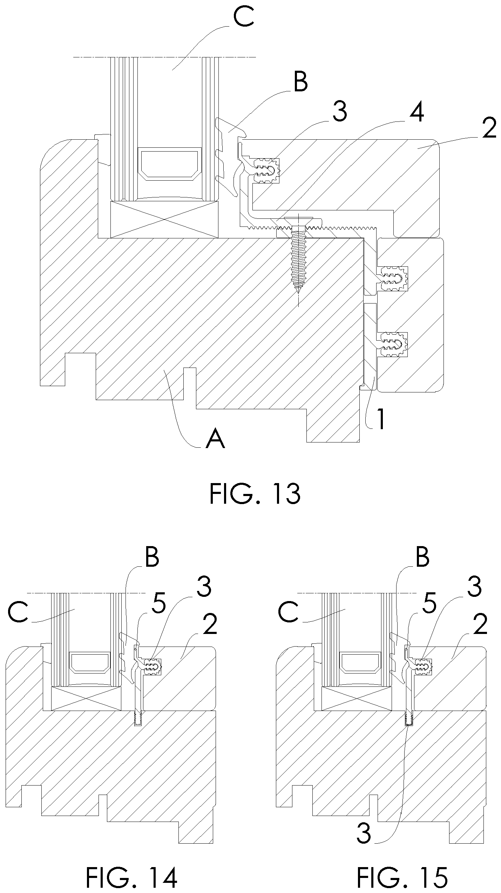

**Figure 13** shows an application similar to that of the previous figure on an internal support (A) consisting of a wooden window.
**Figure 14** and **Figure 15** show a male glazing bead element (5) for reversibly fixing protective, insulating, or decorative panelings, shaped like a longitudinal body, with a first end suitable for engaging an existing groove, preset to water drainage, of the door or window by way of a plurality of parallel longitudinal recesses present on its lateral surface and forming serrations, and an inner longitudinal face suitable for stopping a glass or a double glazing (C) in proximity to the end opposed to said first end. A longitudinal sealing element (3) can be associated with the first end. The external paneling element is associated with the solutions illustrated in the previous figures in a similar manner.

### Detailed description of an embodiment of the invention

The reversible paneling fixing kit according to the present invention comprises a male interconnection element (1), which can be reversibly connected to at least one external paneling element (2) which comprises an external paneling portion (21).

Depending on the possible applications in which the kit is used, such internal support (A) is for instance a fixed frame or a movable frame of a door or window, or a wall of an interior room of a house or a panel of a piece of furniture or even a pane of glass or a slab of marble.

In one preferred embodiment, said male interconnection element (1) has the shape of an elongate longitudinal body, for instance a metal profile, and features at least one inner longitudinal face (11) suitable for being connected, by way of known means, to the surface of said internal support (A), without any need for the latter to be properly preset; for this purpose, said at least one inner longitudinal face (11) is flat, i.e. no bulges nor other devices depart therefrom for locking into corresponding seats cut in the internal support, and it possibly includes a number of holes for nails, screws, or rivets, or it can be made integral by way of other known connection means, such as for instance snap fasteners or snap-in devices.

The male interconnection element (1) features at least one outer longitudinal face, from which one or several longitudinal ribs (12) orthogonally project, which reversibly engage inside their respective longitudinal channels (22) present internally to said one or several external paneling elements (2).

Such longitudinal ribs (12) engage said longitudinal channels (22) by interference.

For this purpose, the lateral surfaces of each of said one or several longitudinal ribs (12) include a plurality of parallel longitudinal recesses (13) which form serrations, so that each of said one or several longitudinal ribs (12) is suitable for engaging a corresponding longitudinal sealing element (3).

The latter is made from a material at least partially deformable, usually synthetic rubber, for instance Ethylene-Propylene Diene Monomer.

As shown in the explanatory embodiment depicted in figure 6, the longitudinal sealing element (3) has at least part of the cross section shaped like a letter "U", whose lateral, inner and outer surfaces, feature a plurality of male longitudinal ridges (31, 32). More specifically, the male longitudinal ridges (31) of the inner lateral surfaces are parallel to each other and are shaped in such a way that at least one ridge engages a respective longitudinal recess (13) of said one or several ribs (12).

Also, said male longitudinal ridges (32) of the outer lateral surfaces of said longitudinal sealing element (3) are suitable for getting deformed to reversibly engage one of said one or several longitudinal ribs (12) in a corresponding longitudinal channel (22) defined on the inner face of an external paneling element (2).

Every external paneling element (2) is mounted on a male interconnection element (1) by introducing each of said one or several male longitudinal ridges (32) in a respective longitudinal channel (22) and exerting an appropriate pressure thereon up to having the rib (12) completely inserted into the longitudinal channel (22); in this way, one is sure that an external paneling element (2) cannot accidentally slip off or detach from the male interconnection element (1).

Advantageously, the parallel longitudinal recesses (13) that form the serrations are shaped in such a way as to offer a greater resistance to the disengagement of the rib from the channel. This effect is achieved thanks to the special profile of the serration, as seen, for instance, in figures 7 and 8. The serration thus obtained is of a sawtooth type, the tilted part facing outwards. Because of the longitudinal rib (12) being inserted into the longitudinal channel (22), the longitudinal sealing element (3) gets deformed and compressed in the longitudinal recesses (13); the sawtooth shape makes a subsequently disengagement more difficult.

In a particularly complete embodiment, the male longitudinal ridges (32) of the outer lateral surfaces of the longitudinal sealing element (3) are also shaped in such a way as to offer a greater resistance to outwards flexure, as with the serrations of the longitudinal ribs.

Another object of said longitudinal sealing element (3) might also be that of providing tightness between an external paneling element (2) and the male interconnection element (1) and thermally insulating the former from the second.

In the case of an application for paneling the movable frame of a door or window, the inner longitudinal face (11) of the male interconnection element (1) is connected by way of nails, screws, rivets, glues, or adhesive tapes to the internal support (A), the latter consisting of the frame of a shutter of a door or window. The external paneling portion can advantageously be a strip made from wood or another fine material, internally featuring one or several longitudinal channels (22) internally to which respective longitudinal ribs (12) present on said male interconnection element (1) are inserted.

Surprisingly, the fixing system for panelings according to the present invention can be used for implementing more articulated compositions, such as for instance structures for mounting panelings of interior masonries of a building or for connecting a pane of glass to a panel.

In this event, the external paneling element (2) comprises a female longitudinal interconnection element, the latter featuring an external portion (23) integrally connected to said external paneling portion (21), and an internal portion (24) which defines at least one longitudinal channel (22) which receives a longitudinal rib (12) of the male interconnection element (1). Advantageously, the latter possibly comprises a longitudinal rib (12) which features a plurality of parallel longitudinal recesses (13) in a second section perpendicular to a first section projecting from the outer longitudinal face of the same male interconnection element (1).

Usually, a separation element is interposed between said external portion (23), which is preferably flat, and said internal portion (24), which allows to move the external paneling portion (21) away from the internal support (A). In another embodiment, the side walls of the longitudinal channel (22) consist of a pair of projecting longitudinal ridges (25), parallel to each other, present in the internal portion (24).

Also, according to a particularly complete embodiment, at least the inner faces of the projecting longitudinal ridges feature a plurality of parallel longitudinal recesses (26), which form serrations, so as to offer a greater resistance to accidental slippages.

The kit according to the present invention can perform further functions by integrating other elements; for this purpose, a version of the male interconnection element (1) comprises a knurled external portion (14) suitable for being integrally connected to a corresponding knurled internal portion (44) of a un second male interconnection element (4). Advantageously, the latter can operate as a glazing bead.

The above described kit makes it possible to quickly panel any kinds of internal support (A) in few steps:
i. securing said male interconnection element (1) to said internal support (A);
ii. using said longitudinal sealing element (3) for paneling a respective longitudinal rib (12);
iii. engaging said longitudinal rib (12) paneled with said longitudinal sealing element (3) in a corresponding longitudinal channel (22) of said external paneling element (2).

## Claims

1. A kit for reversibly fixing protective, insulating, or decorative panelings to a raw surface of an internal support (A), comprising a male interconnection element (1), suitable for being integrally connected to said internal support (A) and shaped like a longitudinal body including at least one inner longitudinal face (11) and at least one outer longitudinal face, from which one or several longitudinal ribs (12) orthogonally project; the lateral surfaces of each of said one or several longitudinal ribs (12) featuring a plurality of parallel longitudinal recesses (13) which form serrations, so that each of said one or several longitudinal ribs (12) is suitable for engaging a corresponding longitudinal sealing element (3), made from an at least partially deformable material, at least part of the cross section being shaped like a letter "U", and whose lateral, inner and outer surfaces, feature a plurality of male longitudinal ridges (31, 32), parallel to each other and shaped in such a way that at least one male longitudinal ridge (31) of the inner lateral surfaces engages a respective longitudinal recess (13) of said one or several ribs (12), **characterized in that** said male longitudinal ridges (32) of the outer lateral surfaces of said longitudinal sealing element (3) are suitable for getting deformed, in order to reversibly engage one of said one or several longitudinal ribs (12) in a corresponding longitudinal channel (22) defined on the inner face of an external paneling element (2) which comprises an external paneling portion, and **in that** said at least one inner longitudinal face of said interconnection element (1) is flat.

2. The kit according to the previous claim **characterized in that** said external paneling element (2) comprises a female longitudinal interconnection element, the latter featuring an external portion (23) integrally connected to said external paneling portion (21), and an internal portion (24) which defines at least one longitudinal channel (22) suitable for reversibly receiving a respective longitudinal rib (12).

3. The kit according to claim 2 **characterized in that** said external portion (23) is flat and is suitable for being integrally connected to said external paneling portion (21), and a separation element is interposed between it and said internal portion (24).

4. The kit according to the previous claim 3 **characterized in that** it comprises a longitudinal rib (12) featuring a plurality of parallel longitudinal recesses (13) in a second section perpendicular to a first section which projects from the outer longitudinal face of the male interconnection element (1).

5. The kit according to claim 2 **characterized in that** the side walls of said at least one longitudinal channel (22) consist of a pair of projecting longitudinal ridges (25), parallel to each other, which project from said internal portion (24).

6. The kit according to the previous claim 5 **characterized in that** the inner faces of said projecting longitudinal ridges (25) feature a plurality of parallel longitudinal recesses (26) which form serrations.

7. The kit according to claim 1 **characterized in that** along the inner face of said external paneling portion (21) of said external paneling element (2) there is defined at least one longitudinal channel (22).

8. The kit according to any of the previous claims **characterized in that** said male interconnection element (1) comprises a knurled external portion (14) suitable for being integrally connected to a corresponding knurled internal portion (44) of a second male interconnection element (4).

9. The kit according to claim 8 **characterized in that** said second male interconnection element (4) is shaped like a longitudinal body, an inner longitudinal face (41) being perpendicular to the knurled internal portion (44), wherein there is defined at least one longitudinal seat (45) suitable for receiving a gasket (B) of a glass or a double glazing (C), and an outer longitudinal face from which one or several longitudinal ribs (42) orthogonally project; the lateral surfaces of each of said one or several longitudinal ribs (42) feature a plurality of parallel longitudinal recesses (43) which form serrations, so that each of said one or several longitudinal ribs (42) is suitable for engaging a corresponding longitudinal sealing element (3) implemented according to claim 1.

10. A male glazing bead element (5) for reversibly fixing protective, insulating, or decorative panelings to an existing water drainage groove in a slotted door or window, shaped like a longitudinal body, having a first end suitable for engaging said groove of the door or window by way of a plurality of parallel longitudinal recesses present in its lateral surface and forming serrations, and an inner longitudinal face suitable for stopping a glass or a double glazing (C) in proximity to the end opposed to said first end and at least one outer longitudinal face from which one or several longitudinal ribs orthogonally project as those of the male interconnection element (1) of claim 1, each of which being suitable for engaging a corresponding longitudinal sealing element (3), as described in claim 1.

11. The male glazing bead element (5) according to claim 10, wherein said inner longitudinal face includes a longitudinal seat (45) suitable for receiving a gasket (B) of said glass or double glazing (C).

12. A method to panel an internal support by using a kit according to any of the previous claims 1 thru 9 comprising the following steps:
i. securing said male interconnection element (1) to said internal support (A);
ii. using said longitudinal sealing element (3) for paneling a respective longitudinal rib (12);
iii. engaging said longitudinal rib (12) paneled with said longitudinal sealing element (3) in a corresponding longitudinal channel (22) of said external paneling element (2).
